(19) Europäisches Patentamt / European Patent Office / Office européen des brevets

(11) **EP 4 079 005 B1**

(12) **FASCICULE DE BREVET EUROPEEN**

(45) Date de publication et mention de la délivrance du brevet:
**18.10.2023   Bulletin 2023/42**

(21) Numéro de dépôt: **20816468.1**

(22) Date de dépôt: **30.11.2020**

(51) Classification Internationale des Brevets (IPC):
**H04W 4/40** *(2018.01)*   **H04W 4/02** *(2018.01)*
**H04L 67/12** *(2022.01)*   **H04L 67/52** *(2022.01)*

(52) Classification Coopérative des Brevets (CPC):
**H04W 4/40; H04L 67/12; H04L 67/52; H04W 4/02**

(86) Numéro de dépôt international:
**PCT/EP2020/083930**

(87) Numéro de publication internationale:
**WO 2021/121929 (24.06.2021 Gazette 2021/25)**

(54) **DISPOSITIF ET PROCÉDÉ DE MINIMISATION DE LATENCE DANS UN RÉSEAU DE COMMUNICATION V2X**

VORRICHTUNG UND VERFAHREN ZUM MINIMIEREN DER LATENZZEIT IN EINEM V2X-KOMMUNIKATIONSNETZ

DEVICE AND METHOD FOR MINIMISING LATENCY IN A V2X COMMUNICATION NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **19.12.2019  FR 1914958**

(43) Date de publication de la demande:
**26.10.2022   Bulletin 2022/43**

(73) Titulaires:
• **Renault s.a.s**
  **92100 Boulogne Billancourt (FR)**
• **NISSAN MOTOR Co., Ltd.**
  **Yokohama-shi, Kanagawa 221-0023 (JP)**

(72) Inventeur: **BAGLIN, Matthieu**
  **31170 Tournefeuille (FR)**

(74) Mandataire: **Renault Group**
  **Renault s.a.s.**
  **1 avenue du Golf**
  **FR TCR AVA 055**
  **78084 Guyancourt Cedex (FR)**

(56) Documents cités:
**WO-A1-2017/168364**

• **"Intelligent Transport Systems (ITS); Vehicular Communications; Basic Set of Applications; Part 2: Specification of Cooperative Awareness Basic Service", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ITS WG1, no. V1.2.1, mars 2011 (2011-03), XP014064618,**

**Description**

Domaine technique

L'invention concerne de manière générale les réseaux de communication et en particulier un dispositif V2X et un procédé d'envoi de message V2X dans un réseau de communication V2X.

Les technologies de communication entre véhicules ont connu un essor majeur au cours des dernières années pour améliorer la sécurité routière et optimiser la circulation routière. De telles technologies de communication sont déployées dans les systèmes de transport intelligents (ITS) entre des véhicules connectés, pour permettre une communication entre les véhicules et leur environnement.

Les systèmes ITS reposent sur la diffusion de messages de sécurité de base (BSM) courts selon des technologies d'accès radio appelés entre stations ITS, par exemple entre véhicules (V2V), entre véhicules et infrastructures (V2I), et entre véhicules et piétons (V2P). La diffusion de tels messages permet de déclencher des actions adaptées dans des situations en temps réel, telles qu'une alerte en cas de détection de collision, ou une action d'arrêt urgent en cas de détection d'un danger.

Les messages V2X (notamment V2V, V2I et V2P) peuvent être échangés selon différents types de communications reposant sur une technologie d'accès radio, telles que par exemple :

- des communications directes V2V basés sur des technologies courtes portée, telles que par exemple, les communications dédiées à courte portée (ou DSRC pour « Dedicated Short Range Communications » selon l'acronyme d'origine anglo-saxonne couramment utilisée) qui peuvent reposer sur la norme IEEE 802.11p, la technologie PC5-mode 4 issue des technologies cellulaires reposant sur le standard 3GPP version 14, ou la technologie 5G reposant sur le standard 3GPP version 16 ;
- des communications indirectes (V2N2V) utilisant une connectivité 4G ou 5G (via l'interface air, encore appelée interface Uu, pour les réseaux LTE and 5G).

La synchronisation temporelle entre les stations ITS est fondamentale dans la mesure où les informations diffusées dans les messages V2X sont horodatées et nécessitent d'être interprétées correctement par les stations ITS réceptrices. Il est connu d'utiliser une source commune de système de positionnement par Satellite GNSS (acronyme pour « Global Navigation Satellite System ») pour synchroniser les temps des dispositifs ITS existants.

Dans les approches existantes, les messages V2X envoyés sur le réseau de communication V2X sont horodatés par la station ITS qui les envoie en utilisant un Temps de Génération de données de message V2X qui est généralement périodique lorsque les messages V2X sont envoyés régulièrement.

Une station ITS transmet ses messages V2X dans le réseau V2X avec une meilleure précision d'horloge. En particulier, les systèmes ITS sont configurés de telle sorte que lorsque la valeur absolue de la différence maximale entre le temps d'horloge de la station ITS et la base de temps (référence de temps du système ITS) est supérieure à un seuil de temps actuellement fixé à 200 ms, la station ITS n'est pas autorisée à envoyer de messages V2X.

Différents types de messages V2X peuvent être échangés. Par exemple, pour des messages de type CAM (acronyme pour "Cooperative Awareness Messages" signifiant 'Message de connaissance coopérative'), un modèle particulier peut être utilisé pour la latence globale du message. L'envoi d'un message par une station ITS comprend un encodage par la station ITS émettrice pendant un temps d'encodage, le transport du message par une technologie d'accès radio à une station ITS réceptrice pendant un temps de transmission et le décodage du message V2X par la station ITS pendant un temps de décodage. Le temps de transmission du message selon la technologie d'accès radio ne peut pas être compressé. En effet, ce temps de transmission est standardisé et ne peut être réduit significativement sans changer l'interopérabilité avec les autres station ITS.

Pour envoyer un message V2X, une application V2X d'une station ITS place d'abord le message V2X sur une interface de distribution, à un temps d'injection (ou temps de génération). A l'instant d'injection, le message est échantillonné mais non encore envoyé sur le réseau d'accès radio. Le message est ensuite encodé et envoyé sur la liaison radio au moyen d'une technologie d'accès radio.

Chaque message V2X devant être envoyé par une station ITS vers des stations ITS réceptrices porte ainsi une information d'horodatage correspondant à son temps d'injection. La différence de temps entre l'instant de génération d'un message V2X et l'instant d'envoi effectif du message sur le réseau d'accès radio peut constituer une latence importante. Par ailleurs, la différence de temps entre l'instant où un message V2X est transmis sur l'interface de distribution et l'instant d'envoi du message ne peut pas être prédite a priori et par suite ne peut pas être compensée.

Certains cas d'usage nécessitent une latence particulièrement courte pour fonctionner. On peut citer par exemple le cas de systèmes coopératifs tels que le groupement de véhicules par pelotons (platooning) qui requièrent un échange d'information entre les véhicules avec une latence inférieure à 10ms.

Il existe donc un besoin pour un procédé et un dispositif de minimisation de latence dans une station ITS.

Le document WO 2017/168364 A1 divulgue un procédé implémenté dans un dispositif V2X pour la planification de la transmission de paquets de données.

Définition générale de l'invention

L'invention vient améliorer la situation en proposant un procédé implémenté dans un dispositif V2X pour échanger des messages V2X comprenant des paquets de données avec un ou plusieurs dispositifs V2X récepteurs connectés via un réseau de communication cellulaire.

Le procédé comprend les étapes consistant à :

- exécuter une ou plusieurs applications V2X, l'exécution d'une application V2X comprenant la génération de données de message V2X associées à l'application V2X,
- transmettre lesdites données de message V2X sur une l'interface de distribution, à un instant d'injection, et
- transmettre le message V2X sous une forme encodée à partir des données de messages récupérées sur l'interface de distribution auxdits au moins un dispositif V2X récepteur, via une liaison radio, en utilisant une technologie d'accès radio, à un instant d'envoi.

Avantageusement, l'instant d'injection est déterminé à partir d'un temps d'injection initial défini par une période prédéfinie, le procédé comprenant une étape consistant à calculer l'instant d'injection d'un message courant à partir du temps d'injection initial et d'informations de temps relatives à au moins un message V2X précédent envoyé par le dispositif V2X via la liaison radio, les informations de temps relatives à un message précédent comprenant l'instant d'injection du message précédent sur l'interface de distribution et l'instant d'envoi du message V2X précédent par le dispositif de communication V2X via la liaison radio.

Dans un mode de réalisation, l'étape de calcul du temps d'injection peut comprendre un calcul de la différence de temps entre un temps relatif à l'instant d'envoi du message V2X précédent et l'instant d'injection du message précédent, l'instant d'injection du message V2X étant calculé en déterminant si au moins une condition relative à ladite différence de temps et à au moins un seuil prédéterminé est satisfaite.

L'instant d'injection d'un message V2X courant peut être une fonction affine du temps d'injection initial défini par ladite période, ayant un coefficient directeur égal à 1 et une ordonnée à l'origine positive ou négative en fonction desdites conditions relatives à la différence de temps et à au moins un seuil prédéterminé.

Selon un aspect particulier, la période de temps peut être est un multiple d'une valeur temporelle de référence, et en ce que l'ordonnée à l'origine est fixée à une valeur négative si ladite différence est supérieure ou égale à la valeur temporelle de référence.

L'ordonnée à l'origine peut être fixée à une valeur négative si la différence est strictement inférieure à un seuil supérieur prédéfini.

Alternativement, l'ordonnée à l'origine peut être fixée à une valeur positive si la différence est strictement supérieure à un seuil supérieur prédéfini.

La valeur de l'ordonnée à l'origine peut dépendre de la charge de traitement du procédé V2X.

En particulier, l'ordonnée à l'origine peut dépendre de la charge des processeurs utilisés pour exécuter le procédé.

Les informations générées dans un message V2X peuvent être collectées de manière synchrone ou asynchrone, après le déclenchement de l'injection.

Il est en outre proposé un dispositif V2X configuré pour échanger des messages V2X comprenant des paquets de données avec un ou plusieurs dispositifs V2X récepteurs connectés audit dispositif V2X via un réseau de communication cellulaire, ledit dispositif V2X comprenant:

- un module applicatif exécutant une ou plusieurs applications V2X, le module applicatif étant apte à générer des données de message V2X associées à une ou plusieurs applications V2X du module applicatif,
- une interface de distribution sur laquelle sont placées des données de message V2X générées par une application V2X du module applicatif, à un instant d'injection,
- Un module de communication V2X configuré pour recevoir lesdites données de message V2X via l'interface de distribution, et pour transmettre le message V2X sous une forme encodée auxdits au moins un dispositif V2X récepteur, via une liaison radio, en utilisant une technologie d'accès radio, à un instant d'envoi.

L'instant d'injection est déterminé à partir d'un temps d'injection initial défini par une période de temps. Avantageusement, le dispositif V2X comprend un calculateur de temps d'injection configuré pour calculer l'instant d'injection d'un message V2X à partir du temps d'injection initial et d'informations de temps relatives à au moins un message V2X précédent envoyé par le dispositif V2X via la liaison radio, les informations de temps relatives à un message comprenant l'instant d'injection des données du message V2X précédent sur l'interface de distribution et l'instant d'envoi du message V2X précédent par le dispositif de communication V2X sur la liaison radio.

Dans un mode de réalisation, le calculateur de temps d'injection peut être configuré pour calculer la différence de temps entre un temps relatif à l'instant d'envoi du message V2X précédent et l'instant d'injection du message précédent, et pour calculer l'instant d'injection d'un message V2X courant en déterminant si au moins une condition relative à la différence de temps et à au moins un seuil prédéterminé est satisfaite.

Dans un mode de réalisation, le module de communication peut être configuré pour envoyer une notification au module applicatif, en réponse à l'envoi d'un message V2X auxdits dispositifs V2X récepteurs, le temps relatif à l'instant d'envoi du message V2X précédent dont dépend la différence étant l'instant d'envoi de la notification.

Dans un mode de réalisation, la charge de traitement du module de communication V2X peut dépendre de la position du dispositif V2X envoyée par un système de positionnement, et en ce que le dispositif implémente un mécanisme de synchronisation pour obtenir les informations de position du système de positionnement à un instant optimal défini par rapport au temps initial d'injection d'un nouveau message V2X.

La valeur de l'ordonnée à l'origine peut dépendre de la charge de traitement du module de communication V2X.

L'unité de communication peut être implémentée sur un système informatique comprenant au moins un processeur, et l'ordonnée à l'origine peut dépendre de la charge des processeurs.

Les modes de réalisation de l'invention permettent ainsi une diminution de la latence entre l'instant où un message (Temps d'injection) est transmis sur l'interface de distribution (temps de génération) et l'instant effectif où le message est envoyé sur l'air via la liaison radio par le module de communication V2X.

Brève description des figures

D'autres caractéristiques, détails et avantages de l'invention ressortiront à la lecture de la description faite en référence aux dessins annexés donnés à titre d'exemple et qui représentent, respectivement :

[Fig. 1] La Figure 1 représente un exemple d'environnement opérationnel dans lequel peut être mise en oeuvre l'invention ;

[Fig. 2] La Figure 2 illustre l'échange entre deux stations ITS connectées entre elles via un réseau de communication ;

[Fig. 3] La Figure 3 est un schéma bloc de l'unité de communication VXU d'une station ITS selon certains modes de réalisation;

[Fig. 4] La Figure 4 est un diagramme représentant les temps de traitement pour l'envoi d'un message V2X, dans une station ITS émettrice, selon un mode de réalisation de l'invention ;

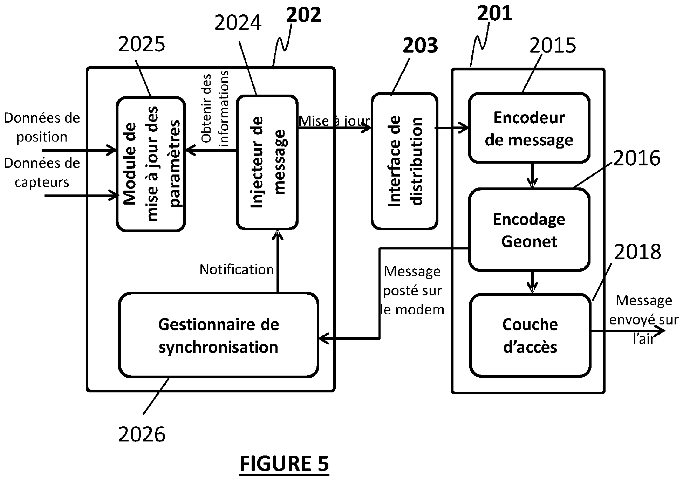

[Fig. 5] La Figure 5 est un schéma bloc illustrant les interactions entre le module applicatif et le module de communication;

[Fig. 6] La Figure 6 est un schéma illustrant une séquence d'injections de données de messages sur l'interface de distribution et d'envois de messages V2X sur l'air, dans le temps, selon un exemple de réalisation;

[Fig. 7] La Figure 7 un organigramme représentant le procédé de calcul de temps d'injection, selon certains modes de réalisation ;

[Fig. 8] La Figure 8 illustre le gain obtenu avec le dispositif V2X et le procédé d'envoi de message V2X, selon un mode de réalisation de l'invention ;

[Fig. 9] La Figure 9 est un diagramme illustrant la réduction du temps de latence par application du procédé selon un mode de réalisation de l'invention, comparativement à l'état de la technique.

Description détaillée de la demande

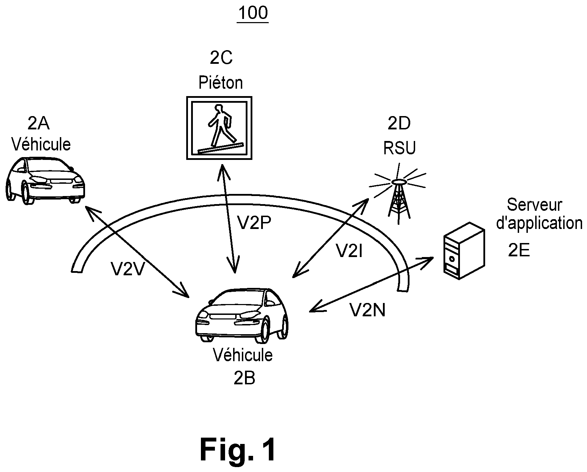

La Figure 1 représente un exemple d'environnement opérationnel 100 d'un système de Transport Intelligent ITS dans lequel peut être utilisé une station ITS (encore appelée dispositif ITS), selon certains modes de réalisation.

Un système ITS permet l'échange de messages V2X entre une station ITS émettrice (par exemple 2-A) et une station ITS réceptrice (par exemple 2-B). Une station ITS est encore appelée plus généralement dispositif V2X dans la présente description.

La transmission de message V2X entre deux stations ITS 2 peut se faire au moyen d'un réseau de communication sans fil.

L'environnement 100 forme une architecture de transports intelligents pouvant être utilisée pour gérer la sécurité et optimiser l'efficacité du trafic routier en utilisant des communications sans fil V2X entre une station ITS émettrice (par exemple 2-A) et une station ITS réceptrice (par exemple 2-B) connectées.

Une station ITS, génériquement désignée par la référence 2, peut-être :

- un équipement véhiculaire 2A ou 2B;
- un équipement piéton 2C tel que par exemple un dispositif mobile équipant un piéton;
- une infrastructure routière 2D (encore appelée Unité de Bord de Route ou RSU); ou
- un serveur d'application 2E.

Des stations ITS 2 de même type ou de différents types peuvent échanger entre elles (envoyer ou recevoir) des messages V2X via un transport de données conforme à 3GPP. En fonction des types des stations ITS communiquant entre elles deux-à-deux, la communication V2X peut notamment être une communication V2V, V2I ou V2N :

- Dans une communication V2V, la communication V2X a lieu entre un véhicule émetteur 2A et un véhicule récepteur 2B, chacun exécutant une application V2V ;
- Dans une communication V2I, la communication V2X a lieu entre un véhicule 2B et une infrastructure routière 2D (RSU), chacune de ces deux stations ITS utilisant une application V2I ; Une infrastructure routière 2D supporte un service V2I pour envoyer et/ou recevoir des données au/du véhicule 2B en utilisant l'application V2I.
- Dans une communication V2N, la communication V2N a lieu entre un véhicule 2B et un serveur d'application V2X 2E distribuant un service V2X vers des stations ITS réceptrices 2, via un réseau cellulaire de communication.

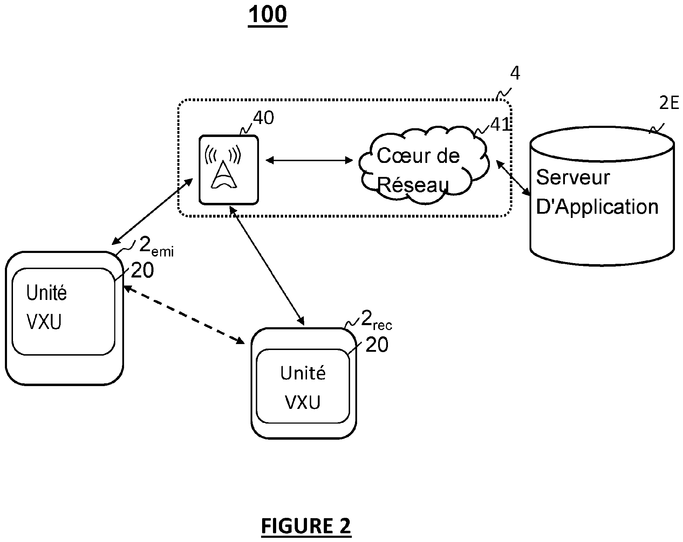

Comme montré sur la figure 2, chaque station ITS 2 est équipée d'une unité de communication 20 (encore appelée ci-après « unité VXU ») configurée pour permettre une communication de messages V2X relative à une ou plusieurs applications V2X avec d'autres stations ITS.

Par exemple, chaque station ITS de type véhicule 2B (ou 2A) peut utiliser son unité de communication 20 pour permettre une communication relative à une ou plusieurs applications V2X :

- entre le véhicule 2B (ou 2A) et le serveur d'application 2E distribuant le service V2X vers les stations ITS réceptrices, ou
- un échange de paquets de données V2X relatifs à une ou plusieurs applications V2X entre le véhicule 2B (ou 2A) et des stations ITS réceptrices 2 situés dans une zone de portée, au moyen d'une ou plusieurs Technologies d'Accès Radio Adhoc, la zone de portée correspondant à la portée la plus faible des technologies radio Adhoc.

La Technologie d'Accès Radio (RAT) correspond au procédé de connexion physique sous-jacent utilisé pour un réseau de communication radio, tel que par exemple et de manière non limitative une technologie d'accès radio de troisième, quatrième ou cinquième génération (3G, 4G, 5G), une communication Adhoc de type 802.11p, une communication Adhoc de type PC5.

Une station ITS de type véhicule peut être équipée de moyens de communication sans fil (en émission et réception) adaptés pour la communication avec le réseau cellulaire 4 et/ou pour la communication à base de technologie d'accès radio avec les stations ITS réceptrices 2.

Une station ITS 2 exécute une ou plusieurs applications V2X qui déclenchent l'échange de messages V2X entre les stations ITS. Les applications V2X peuvent être liées à divers services intelligents et utiliser des données environnementales acquises par les stations ITS au moyen de capteurs et/ou de caméras.

Le réseau cellulaire de communication 4 peut comprendre une station de base 40 et un coeur de réseau cellulaire 41. Le réseau de communication 4 permet à une station ITS émettrice ($2_{emi}$ par exemple) d'accéder à un service V2X correspondant à une application V2X et d'envoyer des messages V2X, sous la forme de paquets de données V2X encodés, à des stations ITS réceptrices ($2_{rec}$ par exemple) via une technologie d'accès radio. La station ITS réceptrice reçoit les paquets de données V2X émis par la station ITS émettrice et décode le paquet reçu.

Une station ITS 2 de type véhicule (2A ou 2B par exemple) peut recevoir des données du serveur d'application 2E par l'intermédiaire de station de base(s) 40 et/ou du coeur de réseau 41.

Une station ITS émettrice 2 de type véhicule (2A ou 2B) peut notamment utiliser le serveur d'application 2E pour relayer, multi-diffuser ou diffuser des informations de trafic routier ou des informations de sécurité ou des informations d'applications routières à des stations ITS réceptrices exécutant une application V2X correspondant à celle de la station ITS émettrice.

Par exemple, une station ITS émettrice de type véhicule 2 (2A par exemple) peut diffuser un message V2V simultanément (par exemple en parallèle) à plusieurs autres véhicules 2B situés à proximité ou un message V2I à une unique infrastructure routière 2D ou diffuser un message V2P à tous les dispositifs piétons équipés d'un dispositif mobile 2C situés à proximité.

Le serveur d'application 2E peut être tout type de serveur débarqué sur le réseau (serveur 'cloud' ou serveur distribué par exemple) implémentant des fonctions de traitement de données qui envoient les informations dont une station ITS a besoin.

Le réseau de communication cellulaire 4 peut être par exemple un réseau LTE, les stations de base étant des noeuds eNB du réseau LTE.

Les modes de réalisation de l'invention permettent d'optimiser la latence de traitement de messages V2X envoyés par l'unité de communication VXU d'une station ITS émettrice $2_{emi}$ et reçus par une station ITS réceptrice $2_{rec}$ par la liaison radio au moyen d'une technologie d'accès Radio.

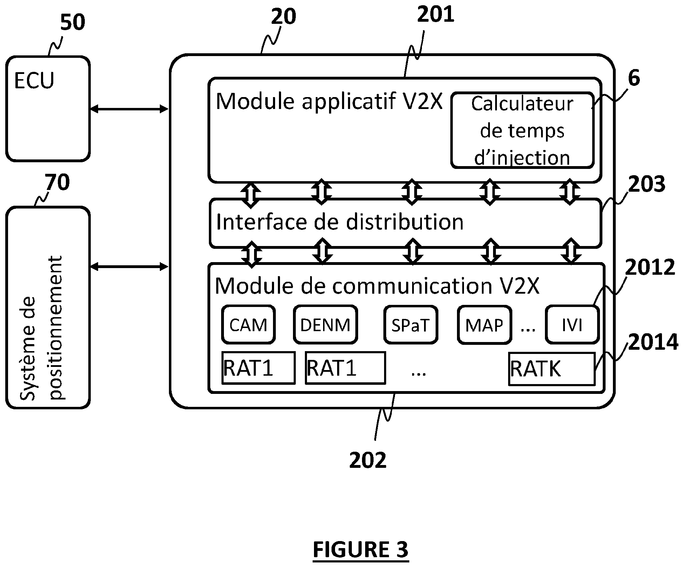

La figure 3 représente une unité de communication VXU 20 implémentée dans une station ITS, selon des modes de réalisation de l'invention.

Une unité de communication VXU 20 est utilisée sur chaque station ITS pour effectuer le codage des messages V2X à envoyer et le décodage des messages V2X reçus.

L'unité de communication VXU 20 peut être connectée à, voire intégrée à l'unité de commande électronique (UCE) 50 de la station ITS qui est un calculateur embarqué qui commande les dispositifs physiques de la station ITS 2.

L'unité de communication VXU 20 comprend un module de communication V2X, 201 ('V2X stack') qui fournit un ensemble d'interfaces à un module applicatif 202 ('V2X layer'). Le module applicatif 202 est configuré pour exécuter une ou plusieurs applications V2X permettant de délivrer des services V2X à d'autres composants en émettant des messages V2X de types donnés. Le module applicatif V2X peut comprendre des éléments d'application pour émettre un objet V2X ou recevoir un événement V2X.

Le module de communication V2X 201 (« V2X stack ») communique avec une interface de distribution 203 ("feeder interface" en langue anglo-saxonne) pour générer les données de messages V2X. Pour envoyer un message V2X, une application V2X du module applicatif 202 distribue des données de message V2X à un composant 2012 du module de communication V2X 201 via l'interface de distribution 203. L'application V2X du module applicatif 202 peut également recevoir des données de composants 2012 en utilisant des protocoles adaptés (CAN par exemple). Le module applicatif 202 est ainsi configuré pour distribuer des données V2X aux composants 2012 via l'interface de distribution 203 pour permettre l'envoi de message V2X correspondant à un composant 2012 (par exemple composant CAM responsable de l'envoi de messages de type CAM). Les messages V2X contenant des informations V2X peuvent être ainsi transmis périodiquement ou régulièrement à d'autres stations ITS.

Dans un mode de réalisation, l'interface de distribution ('Feeder Interface') peut donner accès aux données de messages V2X injectées au module de communication V2X, par exemple en ouvrant une 'socket'. Le module de communication 201 peut alors récupérer les données de messages V2X (par exemple sur la socket) et les stocker dans ses variables internes pour les traiter en vue de l'envoi d'un message V2X. Le module de communication 202 peut notamment stocker une information d'horodatage de messages V2X correspondant au temps d'injection des données de messages sur l'interface de distribution 203 et mettre à jour les valeurs de tous les champs inclus dans les données de messages (par exemple, la vitesse et/ou la position de la station ITS) pour les encoder et les empaqueter dans le prochain message V2X qui sera envoyé sur la liaison radio via une technologie d'accès radio 2014.

Dans la suite de la description, une injection de message V2X fera référence à une injection de données de message V2X sur l'interface de distribution 203.

Différents types de messages V2X peuvent être envoyés par l'unité de communication VXU 20 d'une station ITS. Chaque type de message est pris en charge par un composant correspondant 2012 du module de communication V2X.

Par exemple, une connaissance coopérative ('Cooperative awareness' en langue anglo saxonne) relative au trafic routier consiste à assurer que les usagers routiers (tels que les véhicules 2A et 2B ou les dispositifs piétons 2C), ainsi que les infrastructures routières D soient informés chacun de la position, des dynamiques et des attributs de chaque autre usager routier ou infrastructure. Des exemples d'usagers routiers comprennent sans limitation des véhicules, des motos, des bicyclettes, ou des piétons. Des exemples d'infrastructures routières incluent sans limitation des panneaux de signalisation routiers, des feux tricolores, des barrières de passage à niveau, des ponts, etc. Pour assurer une telle connaissance mutuelle, des informations sont régulièrement échangées. Ces informations de connaissance coopérative sont empaquetées dans un message V2X particulier, appelé CAM (Message de Connaissance Coopérative), émis périodiquement par chaque station ITS.

Chaque message CAM comprend son information d'horodatage qui correspond au temps d'injection du message sur l'interface de distribution 203.

Une station ITS peut émettre d'autres messages V2X qui sont horodatés tels que :

- des messages appelés DENM (acronyme pour 'Decentralized Environmental Notification Messages'). Les messages DENIM sont utilisés pour transmettre des informations relatives aux événements ou situations spéciaux (comme par exemple un avertissement indiquant des travaux routiers, des embouteillages, etc.).

- des messages MAP pour transmettre des données géographiques ; un message MAP permet d'encoder et de transmettre la configuration géographique d'un croisement routier ;
- un message SPAT (acronyme pour "Signal Phase And Timing"); les messages SPAT encodent les informations de phases et de temps d'un signal de feu de signalisation. Le message comprend des informations sur les signaux et références des identifiants d'un message MAP pour assigner les informations de phase et de temps à une voie particulière ;
- Des messages IVI, émis par des stations ITS, comprenant des informations de véhicules (IVI: acronyme pour « In Vehicle Information Message ») ; de tels messages sont émis pour transmettre des données relatives aux informations externes au véhicule, telles que par exemple des signaux de trafic localisés près de la route à proximité du véhicule ;
- Des messages CPM (acronyme pour « Collective Perception Message (CPM) ») contenant des données de capteurs brutes et traitées équipant une station ITS de type véhicule.

Dans les réalisations existantes, une application V2X ne peut obtenir les données des autres composants que de manière asynchrone en utilisant des protocoles particuliers (transitant sur des bus de données CAN par exemple) et doit délivrer ces données à l'interface de distribution 203 de la couche V2X, sans connaissance préalable de l'instant auquel le message V2X suivant sera envoyé.

Les données de messages V2X générés par une application sont associées à un temps d'injection (appelé ci-après temps d'injection initial) défini par une période de temps, par exemple selon la norme ETSI EN 102894-2. Dans les solutions existantes, les données de messages sont injectées sur l'interface de distribution 203 au temps d'injection initial défini par la période de temps.

Les modes de réalisation de l'invention fournissent avantageusement une station ITS capable d'injecter des données de messages sur l'interface de distribution à un instant d'injection optimisé calculé par un calculateur de temps d'injection 6.

Le calculateur de temps d'injection 6 est avantageusement configuré pour calculer l'instant d'injection $t_{inj}$ à partir du temps d'injection initial défini par la période et d'informations de temps relatives à au moins un message V2X précédemment envoyé par la station ITS via la liaison radio, les informations de temps relatives à un message précédent comprennent l'instant d'injection des données du message V2X précédent sur l'interface de distribution et l'instant d'envoi du message V2X précédent par le dispositif de communication V2X sur la liaison radio, ce qui permet de diminuer la latence de la station ITS.

La suite de la description sera faite en référence à un calculateur de temps d'injection 6 utilisant les informations de temps relatives au seul message précédent, à titre d'exemple non limitatif. L'homme du métier comprendra aisément que l'invention s'applique également à un calculateur de temps d'injection 6 utilisant les informations de temps relatives à une pluralité de messages précédents, en utilisant une fenêtre glissante.

L'unité VXU 20 de la station ITS 2 peut ainsi générer des messages V2X comprenant les informations temporelles les plus récentes, quel que soit le type de message envoyé.

Bien que les modes de réalisation de l'invention s'appliquent à tout type de message V2X (tel qu'un message CAM, DENM, SPAT, etc.), la description qui suit des modes de réalisation de l'invention sera faite principalement en référence à un message de type CAM, à titre d'exemple illustratif non limitatif.

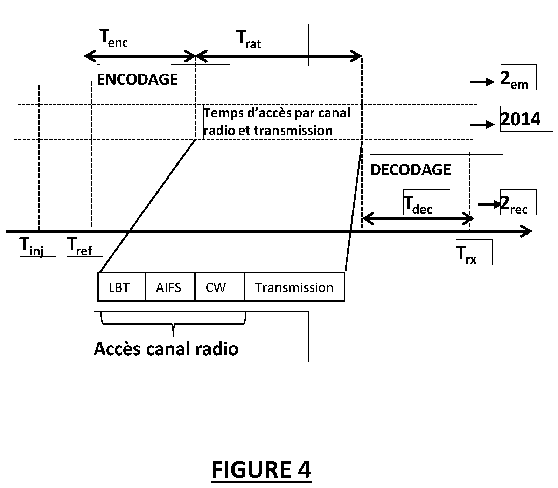

La figure 4 représente un exemple d'envoi d'un message V2X de type CAM d'une station ITS émettrice vers une station ITS réceptrice.

Comme montré sur la figure 4, l'envoi d'un message V2X depuis une station ITS émettrice $2_{em}$ vers une station ITS réceptrice $2_{rec}$ comprend :

- un encodage du message V2X par la station ITS émettrice $2_{em}$ pendant une durée $T_{enc}$;
- la transmission du message V2X via une technologie à accès radio 2014 pendant une durée $T_{RAT}$ ;
- le décodage du message V2X par la station réceptrice V2X $2_{rec}$ pendant une durée $T_{dec}$.

La durée de transmission $T_{RAT}$ du message V2X par une technologie à accès radio comprend le temps d'accès par canal radio et la transmission du message.

La durée de transmission $T_{RAT}$ est incompressible. En effet, la durée de transmission $T_{RAT}$ n'est pas estimable facilement car elle dépend du nombre de messages transmis dans la bande de fréquence utilisée à l'instant T.

Selon les modes de réalisation de l'invention, l'unité de communication VXU 20 d'une station ITS 2 est configurée pour horodater chaque message V2X à envoyer dans le réseau V2X en utilisant un temps d'injection $T_{inj}$ (encore appelé ci-après temps de génération) calculé de manière à diminuer la latence.

L'information d'horodatage (Temps d'injection) associée à un message V2X destiné à être envoyé d'une station

ITS émettrice $2_{em}$ à une ou plusieurs stations réceptrices ITS $2_{rec}$ correspond au temps $T_{inj}$ qui correspond au placement du message V2X sur l'interface de distribution 2010.

Les modes de réalisation de l'invention permettent avantageusement de minimiser la différence de temps entre le temps d'injection et l'envoi effectif du message V2X sur l'interface air, et par suite la latence liée à l'émission d'un message.

L'unité de communication VXU 20 selon les modes de réalisation de l'invention est avantageusement configurée pour réduire la différence entre le temps de génération $T_{inj}$ d'un message et le temps d'envoi effectif de ce message vers les stations ITS réceptrices 2R en utilisant la technologie d'accès radio, en utilisant des informations relatives au message V2X précédemment envoyé.

La station ITS 2 est configurée pour envoyer des messages V2X à différents instants d'envois successifs, par exemple périodiquement.

Comme montré sur la figure 3, le module applicatif 202 de l'unité VXU 20 peut comprendre un calculateur de temps d'injection 6 configuré pour ajuster le temps d'injection initial d'un message V2X $M_i$ à envoyer (message courant), défini par la période de temps, à partir d'un ou plusieurs paramètres relatifs au message V2X $M_{i-1}$ envoyé précédemment par la station ITS à un instant antérieur. Le message V2X peut ensuite être envoyé sur la liaison radio par une couche d'accès radio 2014 du module de communication V2X 201.

Dans un mode de réalisation, le calculateur de temps d'injection 6 peut être configuré pour calculer la différence de temps injectionDelayMs entre un temps relatif à l'instant d'envoi du message V2X précédent et l'instant d'injection du message précédent, et pour calculer l'instant d'injection d'un nouveau message V2X en déterminant si au moins une condition de seuil relative à la différence de temps injectionDelayMs et à au moins un seuil prédéfini est satisfaite. Ce calcul permet ainsi d'effectuer une boucle d'asservissement sur le Tinj.

En particulier, l'instant d'injection $t_{inj\_i}$ d'un message V2X Mi peut être une fonction affine $t_{inj\_i} = f(t_{inj\_init\_i})$ du temps d'injection initial $t_{inj\_init\_i}$ défini par la période de temps, la fonction f() ayant un coefficient directeur égal à 1 et une ordonnée à l'origine N positive ou négative en fonction des conditions de seuil relatives à la différence de temps injectionDelayMs et au(x) seuil(s) prédéfini(s) :

$$t_{inj\_i} = t_{inj\_init\_i} + N$$

Dans des modes de réalisation, la période définissant le temps d'injection initial est un multiple d'une valeur temporelle de référence (100 ms par exemple dans le cas d'un message de type CAM), qui peut notamment être représentative du pas de temps de calcul du calculateur ou d'appel du bloc fonctionnel. Dans un tel mode de réalisation, il peut être vérifié au préalable, avant de tester les conditions de seuil, si la différence InjectionDelayMs est supérieure ou égale à la valeur temporelle de référence (condition préliminaire). Si la condition préliminaire est satisfaite, la prochaine injection peut être déclenchée à un temps TIME_REMOVING_STACK_MISSED_MS par exemple 5ms) pour avancer la prochaine injection.

Si la condition préliminaire n'est pas satisfaite, les conditions de seuils peuvent être testées.

En particulier, le paramètre N peut être fixé à une valeur négative si la différence InjectionDelayMs est strictement inférieure à un seuil minimum prédéfini DELTA INJECTION TIME_MIN_MS (première condition de seuil). Ainsi, l'injection du prochain message V2X peut être avancée par rapport au temps d'injection initial (de 2 ms par exemple).

Si la première condition de seuil n'est pas satisfaite, le paramètre N peut être fixé à une valeur positive si la différence InjectionDelayMs est strictement supérieure à un seuil supérieur prédéfini DELTA INJECTION TIME_MAX MS (deuxième condition de seuil). Ainsi, l'injection du prochain message peut être retardée par rapport au temps d'injection initial (de 2 ms par exemple).

Dans un mode de réalisation, le paramètre N (temps ajouté ou soustrait en fonction de la condition de seuil) peut dépendre de la charge de traitement du module de communication V2X 201 (temps pris par le module de communication pour encoder un message).

L'unité de communication 20 peut être implémentée sur un système informatique comprenant au moins un processeur. Dans des modes de réalisation, le paramètre N (temps ajouté ou soustrait en fonction de la condition de seuil) peut alors dépendre en outre ou en variante de la charge de traitement des processeurs (charge CPU par exemple).

Dans un mode de réalisation, lorsqu'un message V2X est envoyé par l'unité de communication VXU 20 d'une station ITS 2 via la liaison radio en utilisant une technologie d'accès radio 2014, l'application V2X 202 responsable de l'envoi du message peut recevoir une notification de l'envoi effectif du message (envoi par la station ITS vers les stations réceptrices) et du temps d'envoi correspondant au message envoyé sur la liaison radio.

Dans de tels modes de réalisation, le temps relatif à l'instant d'envoi du message V2X précédent $M_{i-1}$ dont dépend la différence InjectionDelayMs est l'instant $t_{notif}$ de réception de la notification relative à l'envoi du message précédent par le module applicatif 202. Il vient alors, en notant $t_{inj\_(i-1)}$ l'instant d'injection effectif du message précédent

$M_{i-1}$:

$$InjectionDelayMs = t_{Notif} - t_{inj\_(i-1)}$$

Le calculateur de temps d'injection 6 peut ainsi ajuster le temps d'injection $T_{inj}$ du prochain message sur l'interface de distribution 2010 d'un temps *N* avant le temps d'injection initial défini par la période de temps. Dans un mode de réalisation, le temps N peut être un nombre N de millisecondes.

La figure est un diagramme bloc représentant les interactions entre le module applicatif 202 et le module de communication V2X 201 selon certains modes de réalisation.

Le module applicatif 202 peut comprendre un gestionnaire de synchronisation d'injection 2026 configuré pour ajuster le temps après l'envoi de chaque message V2X notifié par le module de communication V2X 201, afin d'éviter un décalage temporel.

Le module applicatif 202 peut en outre comprendre un injecteur de message V2X 2024 configuré pour injecter les données de message V2X sur l'interface de distribution 2010 au temps d'injection $T_{inj}$ calculé.

Dans des modes de réalisation, le module applicatif 202 peut comprendre également un module de mise à jour de paramètres 2025 configuré pour recevoir des signaux discrets de la station ITS 2 et pour les mettre à jour. Par exemple, dans une station ITS de type véhicule, de tels signaux discrets peuvent comprendre des signaux de capteurs (données de capteurs) ou des signaux de positionnement (données de position) reçus d'un système de positionnement tel qu'un système GNSS 70. De tels signaux discrets peuvent être envoyés régulièrement dans le temps et peuvent être stockés quand ils sont mis à jour. Dans les modes de réalisation où les signaux GNSS peuvent être interrogés, l'interrogation du signal peut être effectuée après que l'injecteur de message 2024 a décidé de déclencher une nouvelle injection de message V2X pour que l'information obtenue par un tel sondage soit la plus précise possible.

L'injecteur de message V2X 2024 peut ainsi injecter les données de message V2X au temps d'injection calculé sur l'interface de distribution 2020 du module de communication V2X 201, en utilisation les paramètres mis à jour par le module de mis à jour 2024.

Le module de communication V2X peut ainsi accéder aux données de message V2X pour préparer l'envoi du message V2X de type correspondant. Les données sont encodées par un encodeur de message 2015. Un encodeur Geonet 2016 peut également être appliqué, par exemple l'encodeur Geonet 2016 encode et rajoute l'entête ('header' en langue anglo-saxonne) 3gpp Geonet au message. Une couche d'accès 2018 envoie ensuite le message encodé sur l'air en utilisant une technologie d'accès radio.

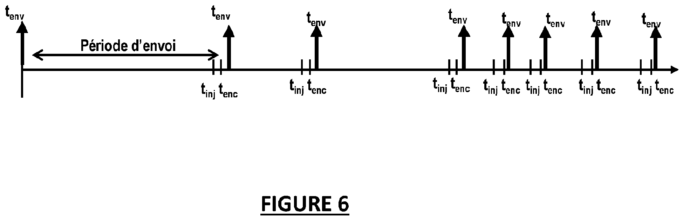

La figure 6 est un diagramme temporel montrant un exemple d'envois successifs de messages V2X par une station V2X, avec une période de temps entre l'envoi de deux messages qui varie dans le temps. Un message est injecté à $t_{inj}$, encodé à $t_{enc}$ et envoyé à $t_{env}$. Comme on peut le voir sur la figure 6, la période de temps entre deux envois successifs de message est d'abord longue puis plus courte au fur et à mesure du temps. Une telle évolution de la période de temps peut être causée par une augmentation de la vitesse du véhicule forçant le module de communication à encoder plus de messages par seconde.

Dans les modes de réalisation, où le temps d'injection initial est défini par une période (fixée par exemple par la norme de standardisation ETSI), la période peut être un multiple de la valeur temporelle de référence et comprise entre la valeur temporelle de référence et un seuil de période maximal. La valeur de référence peut notamment être définie en millisecondes (ms) tandis que le seuil de période maximal peut être de l'ordre de quelques secondes. Par exemple, pour des messages V2X de type CAM, la valeur de référence fixée actuellement par la norme ETSI est égale à 100 ms et le seuil maximal est égale à 1s : ainsi la période d'envoi de message CAM est un multiple de 100ms et est comprise entre 100ms et 1s selon la norme ETSI.

Dans des modes de réalisation, la fréquence de génération d'un message (injection de message V2X) peut être déterminée à partir d'informations de changements de statut de la station ITS, comme par exemple la position ou la vitesse de la station ITS, ou encore la charge du canal radio qui peut être déterminée par un contrôleur de congestion décentralisé DCC de la station ITS 2.

Dans un mode de réalisation, l'injecteur de message 2024 peut déclencher la mise à jour des paramètres de stations ITS par le module de mise à jour 2025 selon une période minimale, par exemple égale à la valeur temporelle de référence (par exemple 100 ms). Ainsi, l'injecteur de message V2X 2024 est capable de toujours fournir les paramètres de station ITS au bon moment.

En variante, l'injecteur de message 2024 peut calculer l'instant d'envoi $t_{env}$ du prochain message V2X à partir de paramètres de station ITS déterminés de manière à minimiser la charge de l'interface de distribution 203.

Dans l'état de la technique, l'injection d'un message V2X se produit aléatoirement dans la fenêtre de traitement du message de sorte que le temps d'injection $t_{inj}$ peut être très antérieur au temps d'envoi effectif du message $t_{env}$ sur la liaison air et génère une latence importante. Au contraire, comme montré sur la figure 6, les modes de réalisation de l'invention permettent de minimiser la différence entre le temps d'envoi $t_{env}$ effectif du message par la couche d'accès 2018 de la station ITS 2 et le temps d'injection $t_{inj}$ du message sur l'interface de distribution 203 par l'injecteur 2024, tel que calculé par le calculateur de temps d'injection 6, ce qui permet de réduire la latence de l'art antérieur.

En pratique, il peut être difficile de mettre à jour tous les paramètres de station ITS 2 exactement au moment de l'injection sauf à les mettre à jour en continu. Cependant, certains paramètres peuvent être importants tels que les paramètres de latitude et/ou la longitude de position de la station ITS stockés en mémoire qui peuvent être mis à jour par le module de mis à jour 2025. Pour optimiser la précision des données envoyées par l'injecteur 2024 au module de communication 201, des modes de réalisation de l'invention permettent de faire correspondre les paramètres de position de station ITS stockés en mémoire avec la position effective de la station ITS au moment de l'injection d'un message, pour éviter que des stations ITS réceptrices ne soient pas informées d'une situation dangereuse au moment de la réception des messages V2X. Les informations de position de la station ITS (incluant la latitude et/ou la longitude de la position de la station ITS) sont généralement fournies par des systèmes GNSS 70, délivrant des informations de position sous la forme de données GPS. De tels systèmes GNSS fournissent cependant les informations de position selon une période donnée, par exemple tous les X millisecondes, X étant supérieur à un seuil (par exemple égal à 100 ms).

Pour obtenir une telle amélioration de la précision de l'injecteur 2024, le gestionnaire de synchronisation 2026 peut être en outré configuré pour mettre en oeuvre un mécanisme de synchronisation apte à collecter, notamment en continu, des informations de position de station ITS 2 à jour (c'est-à-dire qu'elles correspondent à la position effective de la station ITS) au moment du calcul du temps d'injection par l'injecteur 2024.

Dans un tel mode de réalisation, le gestionnaire de synchronisation 2026 peut garantir que le composant GPS (Démon GPS) responsable de la récupération des informations de position (informations GPS) auprès des systèmes GNSS est synchronisé avec le calcul du temps d'injection qui est effectué régulièrement. En particulier, une telle synchronisation peut être réalisée en interrogeant les composants GPS ou en commençant les cycles de rapport au bon moment (i.e. De manière à ne pas retarder le temps d'injection $T_{inj}$ optimal), c'est à dire de manière à ne pas retarder le temps d'injection optimal.

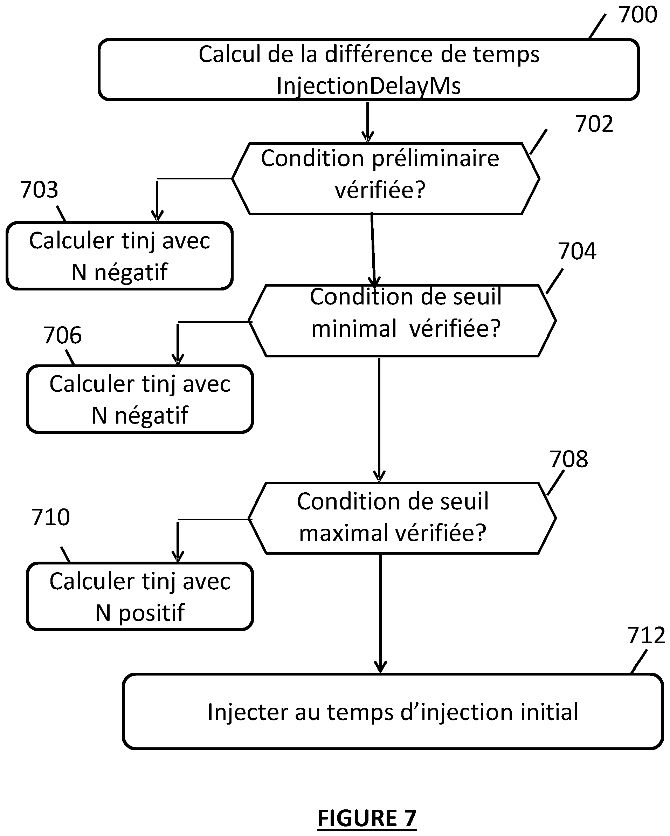

La figure 7 est un organigramme représentant le procédé de détermination du temps d'injection de données de message V2X par une application V2X de la station ITS, selon un mode de réalisation.

Lorsque le module applicatif 202 reçoit une notification du module de communication 201 associée à un message précédent $M_{i-1}$ envoyé sur l'air, la différence InjectionDelayMs entre le temps de réception de la notification $T_{Notif}$ par le module applicatif 202 et le temps d'injection $T_{inj\_(i-1)}$ du message $M_{i-1}$ envoyé précédemment par la station ITS via la liaison radio est calculée à l'étape 700 :

$$InjectionDelayMs = t_{Notif} - t_{inj\_(i-1)}$$

Il est considéré que les injections ont une périodicité minimale CHECK_PERIOD_MS définie par une période égale à la valeur temporelle de référence (par exemple 100 ms pour un message CAM). La périodicité minimale (ou période minimale) CHECK_PERIOD_MS correspond ainsi à la période minimale qui doit être respectée entre l'envoi de deux messages V2X.

Si le module applicatif 202 injecte des données de message à un temps d'injection qui est trop proche du temps d'envoi d'un message V2X envoyé sur l'air par le module de communication 201, c'est-à-dire que la différence InjectionDelayMs est inférieure à la valeur temporelle de référence (période minimale), le module de communication V2X 201 doit en pratique utiliser des données et paramètres d'injections reçus antérieurement et donc obsolètes car le module de communication n'a pas le temps de traiter l'injection courante. Le temps d'injection est alors corrigé pour qu'il converge vers la valeur temporelle de référence.

Ainsi il est déterminé à l'étape 702 une condition préliminaire satisfaite si le retard InjectionDelayMs entre le temps de réception de la notification $T_{Notif}$ et le temps d'injection $T_{inj}$ du message est supérieur ou égal à la valeur temporelle de référence (100 ms par exemple) :

$$injectionDelayMs >= CHECK\_PERIOD\_MS \quad (1)$$

Si la condition préliminaire (1) est vérifiée, le temps d'envoi minimal défini pour le type de message V2X considéré est dépassé.

A l'étape 703, l'application V2X est alors activée à un temps TIME_REMOVING_STACK_MISSED_MS antérieur au temps d'injection initial défini $t_{inj\_init}$ d'une valeur prédéfinie N (par exemple de l'ordre de quelques millisecondes). Dans un tel mode de réalisation, l'injection n'a pas été effectuée correctement et pour compenser cette défaillance d'injection, l'application est réveillée plus tôt, la nouvelle injection de données de message V2X étant par conséquent réalisée plus tôt que le temps d'injection initialement défini $t_{inj\_init}$.

Sinon, si la condition (1) n'est pas vérifiée, il est déterminé si la différence InjectionDelayMs est strictement inférieure à un seuil inférieur DELTA INJECTION TIME_MIN MS, à l'étape 704 (condition de seuil minimal):

$$injectionDelayMs < DELTA\_INJECTION\_TIME\_MIN\_MS \quad (2)$$

Si la condition de seuil minimal (2) est vérifiée l'injection précédente correspond à une latence satisfaisante mais qui reste sous le seuil optimal. Le temps d'injection du message suivant est alors déterminé pour faire converger la différence InjectionDelayMs entre le temps d'injection et le temps d'envoi effectif d'un message vers la valeur optimale à l'étape 706, la valeur optimale est la plus proche possible de 0 et dépend du CPU (notamment de sa charge, de sa puissance de calcul...). Dans un mode de réalisation, l'étape 706 peut être réalisée en activant une injection de données de messages par l'application V2X, responsable de l'envoi des messages de type considéré, plus tôt par rapport au temps d'injection initial $t_{inj-init}$ , en choisissant N négatif (l'injection peut être par exemple avancée de 2 ms).

La fonction f() qui active l'injection d'un message en un instant donné peut correspondre à la fonction de réveil de l'application V2X du module applicatif 202, l'application activant une injection de données de messages V2X à chaque réveil déclenché. Ainsi, à l'étape 706, l'application peut être réveillée plus tôt.

A l'étape 708, si la condition de seuil minimal (2) n'est pas satisfaite, il peut être déterminé si la différence InjectionDelayMs est strictement supérieure à un seuil supérieur DELTA INJECTION TIME_MAX MS (condition de seuil supérieure):

$$injectionDelayMs > DELTA\_INJECTION\_TIME\_MAX\_MS \quad (3)$$

Si la condition de seuil maximal (3) est vérifiée, l'injection précédente génère un retard trop important entre l'envoi du message précédent et le temps d'injection du message précédent. Le temps d'injection du message suivant est alors déterminé pour faire reconverger la différence InjectionDelayMs entre le temps d'injection et le temps d'envoi effectif d'un message vers une valeur optimale, à l'étape 710. La valeur optimale peut être une valeur aussi proche de 0 que possible. Elle peut notamment dépendre du processeur CPU. Par exemple, elle peut être égale à 20 ms ou de manière préférentiellement à 10 ms. Dans un mode de réalisation, l'étape 710 peut être réalisée en activant une injection de données de messages par l'application V2X, responsable de l'envoi des messages V2X de type considéré, plus tard, en choisissant N positif (N peut par exemple être égale à 2 ms).

Par exemple, à l'étape 710, l'application du module applicatif 202 peut être réveillée plus tard, à la prochaine injection de message.

Sinon, si aucune des conditions (1) à (3) n'est satisfaite, la latence représentée par la différence injectionDelayMs est comprise entre le seuil inférieur (DELTA INJECTION TIME_MIN_MS) et le seuil supérieur DELTA INJECTION TIME_MAX MS, et est donc satisfaisante. Le temps d'injection n'est alors pas ajusté et l'application peut être réveillée au temps défini par défaut à l'étape 712.

En variante les conditions (2) et (3) des étapes 704 et 708 peuvent être remplacées par une condition unique en comparant la valeur absolue de la différence injectionDelayMs à un seuil unique et en effectuant les étapes 706 ou 710 en fonction du résultat de la comparaison, de manière similaire.

Les modes de réalisation de l'invention permettent ainsi de réduire la latence de traitement de messages V2X côté station ITS réceptrice, garantissant ainsi une meilleure réactivité au niveau de la station ITS réceptrice et en favorisant la mise en oeuvre d'applications ou de cas d'usage dans lesquels la latence doit être inférieure à un certain seuil.

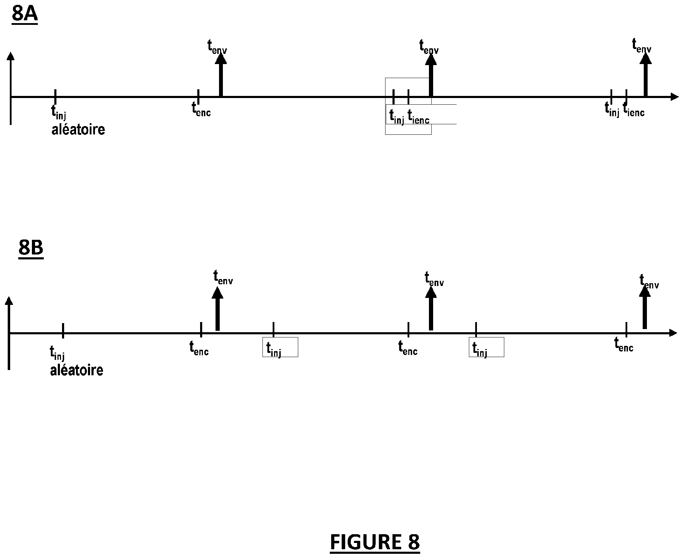

La figure 8 montre deux diagrammes représentant le gain obtenu selon les modes de réalisation de l'invention.

Le premier diagramme 8A montre les temps d'injection $t_{inj}$ des messages sur l'interface de distribution 203 et les temps d'envois $t_{env}$ effectifs de messages via la liaison radio, selon les modes de réalisation de l'invention.

Le deuxième diagramme 8B montre les temps d'injection $t_{inj}$ des messages sur l'interface de distribution 203 et les temps d'envois $t_{env}$ effectifs de messages via la liaison radio, selon l'art antérieur.

Comme montré sur le premier diagramme 8A, le temps d'injection $T_{inj}$ d'un message V2X courant est calculé en fonction des paramètres associés au message précédent, après l'envoi effectif du message précédent par la couche d'accès 2018 du module V2X 201 via la liaison radio, selon les modes de réalisation de l'invention. Comme montré sur le diagramme 8A, le temps d'injection du premier message V2X est calculé aléatoirement mais les temps d'injection suivants sont optimisés en fonction des paramètres associés aux messages envoyés précédemment. L'encodage du message est effectué après l'injection par le module de communication V2X 201. Ainsi, alors que le temps d'injection du premier message peut être éloigné de l'envoi effectif du message via la liaison radio, l'écart entre le temps d'injection et le temps d'envoi des messages suivants est minimisé. Ainsi la fréquence d'injection peut être variable, avec un écart de temps important entre l'injection d'un message et son envoi.

Au contraire, dans les réalisations de l'art antérieur, les temps d'injections des messages suivant l'injection du premier message sont aléatoires, comme illustré sur le diagramme 7B. L'écart entre le temps d'injection $t_{inj}$ d'un message et le temps d'envoi $t_{env}$ du message via la liaison radio peut ainsi être important et impacter fortement la latence.

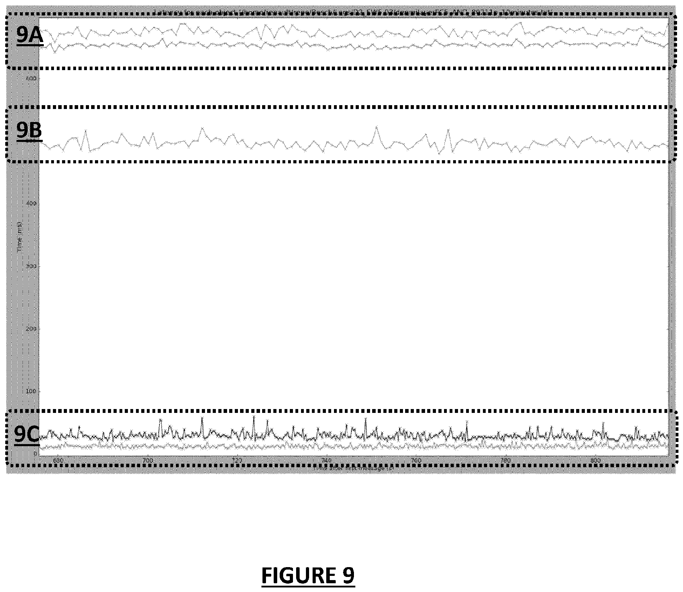

La figure 9 montre trois courbes représentant la latence capturée par une station ITS recevant des messages de type CAM d'une station ITS émettrice.

Les deux premières courbes 9A et 9B représentent la latence de deux stations ITS envoyant des messages V2X selon deux technologies d'accès radio différentes (PC5 et 802.11p), selon l'art antérieur. La dernière courbe 9C représente la réduction de latence obtenue en calculant le temps d'injection selon les modes de réalisation de l'invention, pour une station ITS utilisant les deux technologies d'accès radio PC5 et 802.11p.

Comme représenté sur la courbe 9A, les latences des stations ITS de l'art antérieur sont supérieures à 500 ms. De telles latences sont dues au fait que l'instant d'injection d'un message sur l'interface de distribution 2010 est classiquement aléatoire.

La latence correspond au temps d'accès par canal radio et de transmission du message.

Les modes de réalisation de l'invention fournissent ainsi une station ITS ayant une latence inférieure à la période minimale des messages définie par la valeur temporelle de référence (100ms par exemple pour des messages de type CAM), quelle que soit la vitesse de la station ITS et la périodicité d'envoi des messages CAM.

L'homme du métier comprendra que le système ou des sous-systèmes selon les modes de réalisation de l'invention peuvent être mis en oeuvre de diverses manières par matériel (« hardware »), logiciel, ou une combinaison de matériel et de logiciels, notamment sous la forme de code de programme pouvant être distribué sous la forme d'un produit de programme, sous diverses formes. En particulier, le code de programme peut être distribué à l'aide de supports lisibles par ordinateur, qui peuvent inclure des supports de stockage lisibles par ordinateur et des supports de communication. Les procédés décrits dans la présente description peuvent être notamment implémentés sous la forme d'instructions de programme d'ordinateur exécutables par un ou plusieurs processeurs dans un dispositif informatique d'ordinateur. Ces instructions de programme d'ordinateur peuvent également être stockées dans un support lisible par ordinateur.

Par ailleurs, l'invention n'est pas limitée aux modes de réalisation décrits ci-avant à titre d'exemple non limitatif. Elle englobe toutes les variantes de réalisation qui pourront être envisagées par l'homme du métier. En particulier, l'homme du métier comprendra que l'invention n'est pas limitée à un type particulier de station ITS et s'applique généralement à tout dispositif capable d'échanger des messages V2X avec un autre dispositif, selon le protocole V2X (par exemple tout véhicule tel qu'une voiture, un camion, une moto, un bus, un cycliste ou un dispositif utilisateur d'un piéton). En outre, l'invention n'est pas limitée à une couche d'accès physique particulière et s'applique généralement à toute technologie d'accès radio (par exemple 802.11p, C-V2X, 5G, etc.). Par ailleurs, l'invention n'est pas limitée à un type de message V2X particulier. La portée de l'invention est définie par les revendications.

**Revendications**

**1.** Procédé implémenté dans un dispositif V2X (2) pour échanger des messages V2X comprenant des paquets de données avec un ou plusieurs dispositifs V2X récepteurs connectés via un réseau de communication cellulaire (4), le procédé comprenant les étapes consistant à :

- exécuter une ou plusieurs applications V2X, l'exécution d'une application V2X comprenant la génération de données de message V2X associées à l'application V2X,
- transmettre lesdites données de message V2X sur une l'interface de distribution (203), à un instant d'injection, et
- transmettre le message V2X sous une forme encodée à partir des données de messages récupérées sur l'interface de distribution (203) auxdits au moins un dispositif V2X récepteur, via une liaison radio, en utilisant une technologie d'accès radio, à un instant d'envoi,

**caractérisé en ce que** l'instant d'injection ($t_{inj}$) est déterminé à partir d'un temps d'injection initial défini par une période prédéfinie et **en ce que** le procédé comprend une étape consistant à calculer l'instant d'injection d'un message courant à partir du temps d'injection initial et d'informations de temps relatives à au moins un message V2X précédent envoyé par le dispositif V2X via la liaison radio, les informations de temps relatives à un message précédent comprenant l'instant d'injection du message précédent sur l'interface de distribution et l'instant d'envoi du message V2X précédent par le dispositif de communication V2X via la liaison radio.

**2.** Procédé selon la revendication 1, **caractérisé en ce que** l'étape de calcul du temps d'injection comprend un calcul de la différence de temps entre un temps relatif à l'instant d'envoi du message V2X précédent et l'instant d'injection du message précédent, l'instant d'injection du message V2X étant calculé en déterminant si au moins une condition relative à ladite différence de temps et à au moins un seuil prédéterminé est satisfaite.

**3.** Procédé selon la revendication 2, **caractérisé en ce que** l'instant d'injection d'un message V2X courant est une fonction affine du temps d'injection initial défini par ladite période, ayant un coefficient directeur égal à 1 et une ordonnée à l'origine positive ou négative en fonction desdites conditions relatives à la différence de temps et à au moins un seuil prédéterminé.

**4.** Procédé selon la revendication 3, **caractérisé en ce que** ladite période est un multiple d'une valeur temporelle de référence, et **en ce que** l'ordonnée à l'origine est fixée à une valeur négative si ladite différence est supérieure ou égale à la valeur temporelle de référence.

**5.** Procédé selon l'une des revendications 3 et 4, **caractérisé en ce que** l'ordonnée à l'origine est fixée à une valeur négative si ladite différence est strictement inférieure à un seuil supérieur prédéfini.

**6.** Procédé selon la revendication 3, **caractérisé en ce que** l'ordonnée à l'origine est fixée à une valeur positive si ladite différence est strictement supérieure à un seuil supérieur prédéfini.

**7.** Procédé selon l'une des revendications 2 à 6, **caractérisé en ce que** la valeur de l'ordonnée à l'origine dépend de la charge de traitement du procédé V2X (201).

**8.** Procédé selon l'une des revendications 2 à 7, **caractérisé en ce que** l'ordonnée à l'origine dépend de la charge des processeurs utilisés pour exécuter le procédé.

**9.** Procédé selon l'une des revendications 2 à 8, **caractérisé en ce que** les informations générées dans un message V2X sont collectées de manière synchrone ou asynchrone, après le déclenchement de l'injection.

**10.** Dispositif V2X (2) configuré pour échanger des messages V2X comprenant des paquets de données avec un ou plusieurs dispositifs V2X récepteurs connectés audit dispositif V2X via un réseau de communication cellulaire, ledit dispositif V2X comprenant:

- un module applicatif (202) exécutant une ou plusieurs applications V2X, le module applicatif étant apte à générer des données de message V2X associées à une ou plusieurs applications V2X du module applicatif,
- une interface de distribution (203) sur laquelle sont placées des données de message V2X générées par une application V2X du module applicatif (202), à un instant d'injection,
- Un module de communication V2X (201) configuré pour recevoir lesdites données de message V2X via l'interface de distribution (203), et pour transmettre le message V2X sous une forme encodée auxdits au moins un dispositif V2X récepteur, via une liaison radio, en utilisant une technologie d'accès radio, à un instant d'envoi ($t_{env}$),

**caractérisé en ce que** l'instant d'injection ($t_{inj}$) est déterminé à partir d'un temps d'injection initial défini par une période de temps et **en ce que** le dispositif V2X comprend un calculateur de temps d'injection (6) configuré pour calculer l'instant d'injection ($t_{inj}$) d'un message V2X à partir du temps d'injection initial et d'informations de temps relatives à au moins un message V2X précédent envoyé par le dispositif V2X via la liaison radio, les informations de temps relatives à un message comprenant l'instant d'injection des données du message V2X précédent sur l'interface de distribution (203) et l'instant d'envoi du message V2X précédent par le dispositif de communication V2X sur la liaison radio.

**11.** Dispositif selon la revendication 10, **caractérisé en ce que** le calculateur de temps d'injection (6) est configuré pour calculer la différence de temps entre un temps relatif à l'instant d'envoi du message V2X précédent et l'instant d'injection du message précédent, et pour calculer l'instant d'injection d'un message V2X courant en déterminant si au moins une condition relative à ladite différence de temps et à au moins un seuil prédéterminé est satisfaite.

**12.** Dispositif selon l'une des revendications 10 et 11, **caractérisé en ce que** le module de communication (201) est configuré pour envoyer une notification au module applicatif (202), en réponse à l'envoi d'un message V2X auxdits dispositifs V2X récepteurs, et **en ce que** le temps relatif à l'instant d'envoi du message V2X précédent dont dépend ladite différence est l'instant d'envoi de la notification.

13. Dispositif selon la revendication 12, **caractérisé en ce que** la charge de traitement du module de communication V2X (201) dépend de la position du dispositif V2X envoyée par un système de positionnement, et **en ce que** le dispositif implémente un mécanisme de synchronisation pour obtenir les informations de position du système de positionnement à un instant optimal défini par rapport au temps initial d'injection d'un nouveau message V2X.

**Patentansprüche**

1. Verfahren, das in einer V2X-Vorrichtung (2) zum Austausch von Datenpakete enthaltenden V2X-Nachrichten mit einer oder mehreren über ein zellulares Kommunikationsnetzwerk (4) verbundenen V2X-Empfängervorrichtungen implementiert wird, wobei das Verfahren die Schritte enthält, die darin bestehen:

   - eine oder mehrere V2X-Anwendungen auszuführen, wobei die Ausführung einer V2X-Anwendung die Erzeugung von der V2X-Anwendung zugeordneten V2X-Nachrichtendaten enthält,
   - die V2X-Nachrichtendaten zu einem Injektionszeitpunkt an eine Verteilungsschnittstelle (203) zu übertragen, und
   - die V2X-Nachricht in codierter Form ausgehend von den an der Verteilungsschnittstelle (203) abgerufenen Nachrichtendaten zu einem Sendezeitpunkt unter Verwendung einer Funkzugangstechnologie über eine Funkverbindung an die mindestens eine V2X-Empfängervorrichtung zu übertragen,

   **dadurch gekennzeichnet, dass** der Injektionszeitpunkt ($t_{inj}$) ausgehend von einer durch eine vordefinierte Periode definierten ursprünglichen Injektionszeit bestimmt wird, und dass das Verfahren einen Schritt enthält, der darin besteht, den Injektionszeitpunkt einer aktuellen Nachricht ausgehend von der ursprünglichen Injektionszeit und von Zeitinformationen bezüglich mindestens einer vorhergehenden V2X-Nachricht zu berechnen, die von der V2X-Vorrichtung über die Funkverbindung gesendet wird, wobei die Zeitinformationen bezüglich einer vorhergehenden Nachricht den Injektionszeitpunkt der vorhergehenden Nachricht an der Verteilungsschnittstelle und den Sendezeitpunkt der vorhergehenden V2X-Nachricht durch die V2X-Kommunikationsvorrichtung über die Funkverbindung enthalten.

2. Verfahren nach Anspruch 1, **dadurch gekennzeichnet, dass** der Schritt der Berechnung der Injektionszeit eine Berechnung der Zeitdifferenz zwischen einer Zeit bezüglich des Sendezeitpunkts der vorhergehenden V2X-Nachricht und dem Injektionszeitpunkt der vorhergehenden Nachricht enthält, wobei der Injektionszeitpunkt der V2X-Nachricht berechnet wird, indem bestimmt wird, ob mindestens eine Bedingung bezüglich der Zeitdifferenz und bezüglich mindestens einer vorbestimmten Schwelle erfüllt ist.

3. Verfahren nach Anspruch 2, **dadurch gekennzeichnet, dass** der Injektionszeitpunkt einer aktuellen V2X-Nachricht eine affine Funktion der durch die Periode definierten ursprünglichen Injektionszeit ist, die einen Richtkoeffizienten gleich 1 und einen positiven oder negativen y-Achsenabschnitt abhängig von den Bedingungen bezüglich der Zeitdifferenz und mindestens einer vorbestimmten Schwelle hat.

4. Verfahren nach Anspruch 3, **dadurch gekennzeichnet, dass** die Periode ein Vielfaches eines Bezugszeitwerts ist, und dass der y-Achsenabschnitt auf einen negativen Wert festgelegt wird, wenn die Differenz größer als der oder gleich dem Bezugszeitwert ist.

5. Verfahren nach einem der Ansprüche 3 und 4, **dadurch gekennzeichnet, dass** der y-Achsenabschnitt auf einen negativen Wert festgelegt wird, wenn die Differenz strikt geringer als eine vordefinierte höhere Schwelle ist.

6. Verfahren nach Anspruch 3, **dadurch gekennzeichnet, dass** der y-Achsenabschnitt auf einen positiven Wert festgelegt wird, wenn die Differenz strikt größer als eine vordefinierte höhere Schwelle ist.

7. Verfahren nach einem der Ansprüche 2 bis 6, **dadurch gekennzeichnet, dass** der Wert des y-Achsenabschnitts von der Verarbeitungslast des V2X-Verfahrens (201) abhängt.

8. Verfahren nach einem der Ansprüche 2 bis 7, **dadurch gekennzeichnet, dass** der y-Achsenabschnitt von der Last der Prozessoren abhängt, die zur Ausführung des Verfahrens verwendet werden.

9. Verfahren nach einem der Ansprüche 2 bis 8, **dadurch gekennzeichnet, dass** die in einer V2X-Nachricht erzeugten Informationen nach dem Auslösen der Injektion synchron oder asynchron gesammelt werden.

10. V2X-Vorrichtung (2), die konfiguriert ist, um Datenpakete enthaltende V2X-Nachrichten mit einer oder mehreren V2X-Empfängervorrichtungen auszutauschen, die über ein zellulares Kommunikationsnetzwerk mit der V2X-Vorrichtung verbunden sind, wobei die V2X-Vorrichtung enthält:

   - ein Anwendungsmodul (202), das eine oder mehrere V2X-Anwendungen ausführt, wobei das Anwendungsmodul fähig ist, V2X-Nachrichtendaten zu erzeugen, die einer oder mehreren V2X-Anwendungen des Anwendungsmoduls zugeordnet sind,
   - eine Verteilungsschnittstelle (203), auf der V2X-Nachrichtendaten angeordnet sind, die zu einem Injektionszeitpunkt von einer V2X-Anwendung des Anwendungsmoduls (202) erzeugt werden,
   - ein V2X-Kommunikationsmodul (201), das konfiguriert ist, um die V2X-Nachrichtendaten über die Verteilungsschnittstelle (203) zu empfangen, und um die V2X-Nachricht in codierter Form zu einem Sendezeitpunkt ($t_{env}$) unter Verwendung einer Funkzugangstechnologie über eine Funkverbindung an die mindestens eine V2X-Empfängervorrichtung zu übertragen,

   **dadurch gekennzeichnet, dass** der Injektionszeitpunkt ($t_{inj}$) ausgehend von einer durch eine Zeitperiode definierten ursprünglichen Injektionszeit bestimmt wird, und dass die V2X-Vorrichtung einen Injektionszeitrechner (6) enthält, der konfiguriert ist, um den Injektionszeitpunkt ($t_{inj}$) einer V2X-Nachricht ausgehend von der ursprünglichen Injektionszeit und von Zeitinformationen bezüglich mindestens einer vorhergehenden V2X-Nachricht zu berechnen, die von der V2X-Vorrichtung über die Funkverbindung gesendet wird, wobei die Zeitinformationen bezüglich einer Nachricht den Injektionszeitpunkt der Daten der vorhergehenden V2X-Nachricht an der Verteilungsschnittstelle (203) und den Sendezeitpunkt der vorhergehenden V2X-Nachricht durch die V2X-Kommunikationsvorrichtung auf der Funkverbindung enthalten.

11. Vorrichtung nach Anspruch 10, **dadurch gekennzeichnet, dass** der Injektionszeitrechner (6) konfiguriert ist, um die Zeitdifferenz zwischen einer Zeit bezüglich des Sendezeitpunkts der vorhergehenden V2X-Nachricht und dem Injektionszeitpunkt der vorhergehenden Nachricht zu berechnen, und um den Injektionszeitpunkt einer aktuellen V2X-Nachricht zu berechnen, indem bestimmt wird, ob mindestens eine Bedingung bezüglich der Zeitdifferenz und mindestens einer vorbestimmten Schwelle erfüllt ist.

12. Vorrichtung nach einem der Ansprüche 10 und 11, **dadurch gekennzeichnet, dass** das Kommunikationsmodul (201) konfiguriert ist, um eine Benachrichtigung an das Anwendungsmodul (202) als Antwort auf das Senden einer V2X-Nachricht an die V2X-Empfängervorrichtungen zu senden, und dass die Zeit bezüglich des Sendezeitpunkts der vorhergehenden V2X-Nachricht, von dem die Differenz abhängt, der Sendezeitpunkt der Benachrichtigung ist.

13. Vorrichtung nach Anspruch 12, **dadurch gekennzeichnet, dass** die Verarbeitungslast des V2X-Kommunikationsmoduls (201) von der von einem Positionierungssystem gesendeten Position der V2X-Vorrichtung abhängt, und dass die Vorrichtung einen Synchronisationsmechanismus implementiert, um Positionsinformationen des Positionierungssystems zu einem optimalen Zeitpunkt zu erhalten, der bezüglich der ursprünglichen Injektionszeit einer neuen V2X-Nachricht definiert wird.

## Claims

1. Method implemented in a V2X device (2) for exchanging V2X messages comprising data packets with one or more receiving V2X devices connected via a cellular communication network (4), the method comprising the steps of:

   - running one or more V2X applications, running a V2X application comprising the generation of V2X message data associated with the V2X application,
   - transmitting said V2X message data over a feeder interface (203), at an injection time, and
   - transmitting the V2X message in a format encoded on the basis of the message data recovered over the feeder interface (203) to said at least one receiving V2X device, via a radio link, by using a radio access technology, at a sending time,

   **characterized in that** the injection time ($t_{inj}$) is determined on the basis of an initial injection time defined by a predefined period and **in that** the method comprises a step consisting in calculating the injection time of a current message on the basis of the initial injection time and of time information relating to at least one preceding V2X message sent by the V2X device via the radio link, the time information relating to a preceding message comprising the injection time of the preceding message on the feeder interface and the time of sending of the preceding V2X message by the V2X communication device via the radio link.

2. Method according to Claim 1, **characterized in that** the step of calculation of the injection time comprises a calculation of the time difference between a time relating to the time of sending of the preceding V2X message and the injection time of the preceding message, the injection time of the V2X message being calculated by determining whether at least one condition relating to said time difference and to at least one predetermined threshold is satisfied.

3. Method according to Claim 2, **characterized in that** the injection time of a current V2X message is an affine function of the initial injection time defined by said period, having a directing coefficient equal to 1 and an ordinate at the positive or negative origin as a function of said conditions relating to the time difference and to at least one predetermined threshold.

4. Method according to Claim 3, **characterized in that** said period is a multiple of a reference time value, and **in that** the ordinate at the origin is set at a negative value if said difference is greater than or equal to the reference time value.

5. Method according to one of Claims 3 and 4, **characterized in that** the ordinate at the origin is set at a negative value if said difference is strictly lower than a predefined upper threshold.

6. Method according to Claim 3, **characterized in that** the ordinate at the origin is set at a positive value if said difference is strictly higher than a predefined upper threshold.

7. Method according to one of Claims 2 to 6, **characterized in that** the value of the ordinate at the origin depends on the processing load of the V2X method (201) .

8. Method according to one of Claims 2 to 7, **characterized in that** the ordinate at the origin depends on the load of the processors used to execute the method.

9. Method according to one of Claims 2 to 8, **characterized in that** the information generated in a V2X message is collected synchronously or asynchronously, after the triggering of the injection.

10. V2X device (2) configured to exchange V2X messages comprising data packets with one or more receiving V2X devices connected to said V2X device via a cellular communication network, said V2X device comprising:

- an application module (202) running one or more V2X applications, the application module being capable of generating V2X message data associated with one or more V2X applications of the application module,
- a feeder interface (203) on which are placed V2X message data generated by a V2X application of the application module (202) at an injection time,
- a V2X communication module (201) configured to receive said V2X message data via the feeder interface (203), and to transmit the V2X message in an encoded format to said at least one receiving V2X device, via a radio link, by using a radio access technology, at a sending time ($t_{env}$),

**characterized in that** the injection time ($t_{inj}$) is determined on the basis of an initial injection time defined by a time period and **in that** the V2X device comprises an injection time computer (6) configured to calculate the injection time ($t_{inj}$) of a V2X message on the basis of the initial injection time and of time information relating to at least one preceding V2X message sent by the V2X device via the radio link, the time information relating to a message comprising the injection time of the data of the preceding V2X message on the feeder interface (203) and the time of sending of the preceding V2X message by the V2X communication device over the radio link.

11. Device according to Claim 10, **characterized in that** the injection time computer (6) is configured to calculate the time difference between a time relating to the sending time of the preceding V2X message and the injection time of the preceding message, and to calculate the injection time of a current V2X message by determining whether at least one condition relating to said time difference and to at least one predetermined threshold is satisfied.

12. Device according to one of Claims 10 and 11, **characterized in that** the communication module (201) is configured to send a notification to the application module (202), in response to the sending of a V2X message to said receiving V2X devices, and **in that** the time relating to the sending time of the preceding V2X message on which said difference depends is the sending time of the notification.

13. Device according to Claim 12, **characterized in that** the processing load of the V2X communication module (201) depends on the position of the V2X device sent by a positioning system, and **in that** the device implements a synchronization mechanism to obtain the position information from the positioning system at an optimal time defined with respect to the initial injection time of a new V2X message.

100

2C
Piéton

2A
Véhicule

2D
RSU

Serveur
d'application
2E

V2P

V2I

V2V

V2N

Véhicule
2B

**Fig. 1**

**100**

**FIGURE 2**

**50**

ECU

**70**

Système de positionnement

**20**

**201**

Module applicatif V2X

Calculateur de temps d'injection

**6**

Interface de distribution

**203**

Module de communication V2X

| CAM | DENM | SPaT | MAP | ... | IVI |

**2012**

| RAT1 | RAT1 | ... | RATK |

**2014**

**202**

FIGURE 3

$T_{enc}$

$T_{rat}$

ENCODAGE

$2_{em}$

Temps d'accès par canal radio et transmission

2014

DECODAGE

$T_{dec}$

$2_{rec}$

$T_{inj}$ $T_{ref}$

$T_{rx}$

| LBT | AIFS | CW | Transmission |

Accès canal radio

**FIGURE 4**

**FIGURE 5**

**FIGURE 6**

700

Calcul de la différence de temps
InjectionDelayMs

702

Condition préliminaire
vérifiée?

703

Calculer tinj avec
N négatif

704

Condition de seuil
minimal vérifiée?

706

Calculer tinj avec
N négatif

708

Condition de seuil
maximal vérifiée?

710

Calculer tinj avec
N positif

712

Injecter au temps d'injection initial

**FIGURE 7**

**8A**

**FIGURE 8**

**FIGURE 9**

**EP 4 079 005 B1**

## RÉFÉRENCES CITÉES DANS LA DESCRIPTION

**Documents brevets cités dans la description**

- WO 2017168364 A1